# EUROPÄISCHE PATENTSCHRIFT

(11) **EP 1 420 182 B1**
(45) Veröffentlichungstag und Bekanntmachung des Hinweises auf die Patenterteilung: **24.05.2006**
(21) Anmeldenummer: 03025855.2
(22) Anmeldetag: 11.11.2003
(51) Int. Cl.: F16D 3/68, G01L 3/14

(54) **Elastische Kupplung**
Flexible coupling
Accouplement flexible

(30) Priorität: 13.11.2002 DE 10253092
(43) Veröffentlichungstag der Anmeldung: 19.05.2004
(73) Patentinhaber: A. FRIEDR. FLENDER AG, 46395 Bocholt (DE)
(72) Erfinder: Gödde, Peter, Dr., 46286 Dorsten (DE); Te Uhle, Michael, 46414 Rhede (DE)
(74) Vertreter: Radünz, Ingo

(56) Entgegenhaltungen:
- EP-A- 0 971 142
- GB-A- 1 146 836
- GB-A- 1 434 736
- GB-A- 2 310 291
- JP-A- 11 295 106
- PATENT ABSTRACTS OF JAPAN vol. 006, no. 195 (P-146), 5. Oktober 1982 (1982-10-05) & JP 57 104836 A (HITACHI LTD), 30. Juni 1982 (1982-06-30)

## Beschreibung

Die Erfindung betrifft eine elastische Kupplung.

Elastische Kupplungen werden eingesetzt, um in einer Anlage Antriebsmotoren mit einer Arbeitsmaschine oder mit einem Getriebe zu verbinden. In einer Vielzahl von Anwendungen hat ein geplantes oder ungeplantes Stillsetzen des Antriebsmotors einen erheblichen Produktionsausfall in der Anlage mit entsprechend hohen Kosten zur Folge. Die Kupplungshersteller schreiben in ihren Betriebsanleitungen eine regelmäßige Inspektion vor, um den Verschleißzustand der Elastomerelemente in solchen Kupplungen zu prüfen und damit durch rechtzeitigen Austausch der Elastomerelemente einem ungeplanten Ausfall oder einem Stillstand der Anlage vorzubeugen.

Neben dem Produktionsausfall bedeutet das Stillsetzen des Antriebsmotors zum Zwecke der Überprüfung des Verschleißzustandes der Elastomerelemente einen erheblichen Montageaufwand, da der Antriebsmotor gegen ein unbeabsichtigtes Einschalten gesichert und der - entsprechend einer amtlichen Maschinenrichtlinie zum Schutz vor rotierenden Bauteilen - vorgeschriebene Kupplungsschutz demontiert und nach der Verschleißmessung erneut montiert werden muss.

Die -üblicherweise zu erwartende Lebensdauer der Elastomerelemente liegt abhängig von der Anwendung zwischen drei und acht Jahren. Die Inspektion ist der Betriebsdauer entsprechend oder auch in festen zeitlichen Abständen, z. B. jährlich vorgeschrieben. Dabei wird bei stillstehendem Antrieb und stillstehender Kupplung das Verdrehspiel der Kupplung ermittelt, indem ein Kupplungsteil ohne Drehmoment bis zum Anschlag gedreht wird und auf beide Kupplungsteile eine Markierung aufgebracht wird. Durch Drehen des Kupplungsteiles in die entgegengesetzte Drehrichtung bis zum Anschlag wandern die Markierungen auseinander. Der Abstand der Markierungen ergibt als Sehnenmaß das Verdrehspiel, in das der Verschleiß der Elastomerelemente eingeht.

In der GB-A-1 434 736 ist eine rotierende Kupplung beschrieben, die als Messvorrichtung zur Bestimmung des Drehmomentes ausgebildet ist. Sie umfasst elastische Elemente, die an dem treibenden Teil der Kupplung angebracht sind und mit Anschlägen zusammenwirken, die an dem angetriebenen Teil der Kupplung befestigt sind. Die elastischen Elemente sind unterschiedlich steif ausgeführt, wodurch ein besonders geeigneter Verlauf der Drehfedersteifigkeit erreicht werden soll. Über eine Kennzeichnung am Außenumfang der Kupplungsteile kann der Verdrehwinkel und damit das Drehmoment mit Hilfe eines Stroboskopes abgelesen werden.

Aus der JP 11 295106 A ist ein Drehmoment-Messfühler für eine elastische Kupplung bekannt. Der Drehmoment-Messfühler umfasst einen Anzeigenteil und eine Datenauswertung. Der Anzeigenteil besteht aus einer Skala und einer Anzeigenlinie auf den Kupplungshälften. Der bekannte Drehmoment-Messfühler dient der kontinuierlichen Messung des tatsächlich anliegenden Drehmomentes an der Kupplung und damit in dem Antriebsstrang. Dazu ist eine kontinuierliche Signalerfassung mit Fotosensoren vorgesehen, die das Signal an die Datenverarbeitung weiterleiten. Als wesentliche Bedingung für die Messung des Drehmomentes wird die Gültigkeit des Hookeschen Gesetzes mit einer linearen Kennlinie zwischen Spannung und Verzerrung vorausgesetzt, so dass jedem Verdrehwinkel ein Drehmoment zugeordnet werden kann.

Die angenommenen Bedingungen gemäß JP 11 295106 A liegen bei elastischen Kupplungen im wesentlichen nicht vor. Auch sind bei elastischen Kupplungen bis zu einem Schwellenwert, der den unzulässigen Verschleiß der Elastomerelemente kennzeichnet, die tatsächliche Größe des Verdrehwinkels und damit die Höhe des Drehmomentes ohne irgendeine Bedeutung.

Der Erfindung liegt die Aufgabe zugrunde, die elastische kupplung so zu gestalten, dass die Messung des Verschleißzustandes der Elastomerelemente bei rotierender Kupplung auf einfache Weise möglich ist.

Die Aufgabe wird erfindungsgemäß durch die Merkmale des Anspruches 1 gelöst. Vorteilhafte Ausgestaltungen der Erfindung sind Gegenstand des Unteranspruches.

Die Markierung und das Anzeigenschild auf den rotierenden Kupplungsteilen werden durch die Stroboskoplampe mit stufenlos einstellbarer Blitzfrequenz, sichtbar gemacht. Wird die Blitzfrequenz der Stroboskoplampe mit der Drehzahl der Kupplung synchronisiert, so scheinen die Markierung und das Anzeigenschild für den Betrachter stillzustehen. Auf dem Anzeigenschild kann die sich aus dem Verdrehwinkel ergebende Relativverlagerung der Kupplungsteile entnommen werden. Die Relativverlagerung stellt die Summe aus montagebedingtem Fügespiel, aus elastischer Verformung der Elastomerelemente aufgrund der Drehmomentbelastung sowie aus dem Verschleiß an den Elastomerelementen dar. Damit kann der Verschleiß der Elastomerelemente ohne Stillstand des Antriebes über das während der Rotation der Kupplung sichtbare Anzeigenschild überwacht werden.

Ein Ausführungsbeispiel der Erfindung ist in der Zeichnung dargestellt und wird im Folgenden näher erläutert. Es zeigen:
- Fig. 1: eine elastische Kupplung teils als Längsschnitt und teils in Seitenansicht;
- Fig. 2: die Einzelheit Z nach Fig. 1 und

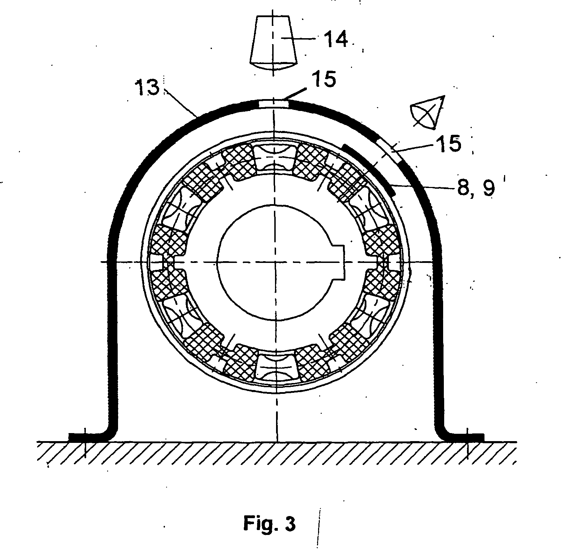

- Fig. 3: eine Kupplung mit Kupplungsschutz.

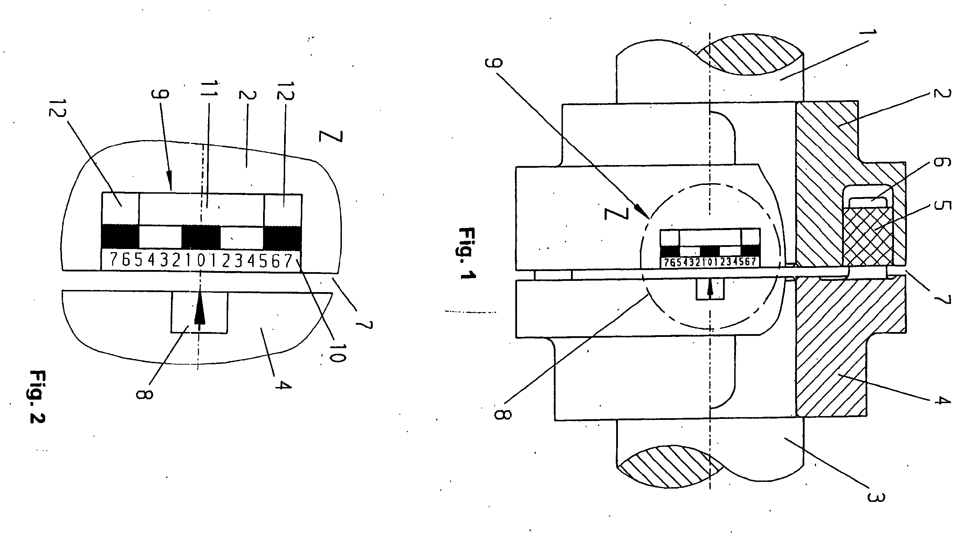

Die in Fig. 1 dargestellte elastische Kupplung ist eine elastische Nocken- oder Klauenkupplung. Sie besteht aus einem ersten Kupplungsteil 2, das mit der Welle 1 eines Antriebsmotors verbunden ist, und aus einem zweiten Kupplungsteil 4, das mit der Welle 3 einer Arbeitsmaschine verbunden ist. In dem ersten Kupplungsteil 2 sind auf einem Kreisbogen mit Abstand voneinander mehrere Taschen angebracht, in die jeweils ein Elastomerelement 5 eingespannt ist. Das zweite Kupplungsteil 4 ist mit Nocken 6 versehen, die jeweils in das erste Kupplungsteil 2 in die Freiräume zwischen den Elastomerelementen 5 eingreifen.

Die Drehmomentübertragung von der Motorwelle 1 auf die Arbeitsmaschinenwelle 3 erfolgt über die Elastomerelemente 5 und die Nocken 6. Dabei bestimmen die Elastomerelemente 5 wesentlich die Übertragungseigenschaften der Kupplung. Zwischen den beiden Kupplungteilen 2, 4 verbleibt ein Kupplungsspalt 7. Durch die Elastomerelemente 5 bedingt, weisen das erste Kupplungsteil 2 und das zweite Kupplungsteil 4 unter Drehmomentbelastung einen Relativverdrehwinkel zueinander auf, der u. a. am Kupplungsspalt 7 sichtbar wird. Anstelle der beschriebenen elastischen Nockenkupplung können auch andere elastische Kupplungen eingesetzt werden, die ebenfalls Elastomerelemente enthalten, wie z, B. elastische Bolzen-, Wulst-, Scheiben- oder Zwischenringkupplungen.

Auf dem Außenrand des zweiten Kupplungsteiles 4, der an den Kupplungsspalt 7 angrenzt, ist eine Markierung 8 angebracht. Mittig gegenüber der Markierung 8 ist auf dem Außenrand des ersten Kupplungsteiles 2, der an den Kupplungsspalt 7 angrenzt, ein Anzeigenschild 9 befestigt. Die Markierung 8 und das Anzeigenschild 9 können beispielsweise durch Klebeetiketten, durch Gravieren, Lackieren oder durch ein ähnliches übliches Verfahren an den Kupplungsteilen 2, 4 angeordnet werden.

Bei einer Drehmomentbelastung bewirkt der Relativdrehwinkel zwischen dem ersten und dem zweiten Kupplungsteil 2, 4 eine Relativverlagerung der Markierung 8 und des Anzeigenschildes 9 zueinander. Die Relativverlagerung bildet die Summe aus montagebedingtem Fügespiel, aus elastischer Verformung der Elastomerelemente 5 aufgrund der Drehmomentbelastung sowie aus dem Verschleiß an den Elastomerelementen 5 ab. Die Stellung von Markierung 8 und Anzeigenschild 9 zueinander ist damit ein Maß für den Verschleißzustand der Elastomerelemente 5.

Das Anzeigenschild 9 besteht aus einer Skala, die bevorzugterweise eine Zahlen- oder Ziffernfolge 10 enthält. Die Ziffer 0 der Skala gibt die Stellung der Kupplungsteile 2,4 zueinander im Stillstand der Kupplung wieder. Die Skala des Anzeigenschildes 9 weist vorzugsweise auch mehrere Anzeigenfelder, z. B. ein mittiges Anzeigenfeld 11 und zwei seitliche Anzeigenfelder 12 auf. Dabei stellt das mittige Anzeigenfeld 11 den zulässigen Bereich und die beiden seitlichen Anzeigenfelder 12 den unzulässigen Bereich des Verschleißzustandes der Elastomerelelemente dar. Über die Zahlen- oder Ziffernfolge 10 oder die Anzeigenfelder 11, 12 kann das Fortschreiten des Verschleißes über die Zeit aufgenommen und der Verschleißzustand quantifiziert werden.

Im Betrieb, das heißt bei mit nahezu konstanter Drehzahl rotierender Kupplung, wird die Stellung von Anzeigenschild 9 und Markierung 8 über eine handelsübliche Stroboskoplampe mit stufenlos verstellbarer Blitzfrequenz sichtbar gemacht. Die Stroboskoplampe wird mit der Kupplung so kombiniert, dass der intermittierende Strahl der Stroboskoplampe auf die Markierung 8 und das Anzeigenschild 9 gerichtet ist. Mit Hilfe einer Mess- und Regeleinheit werden die Drehzahl der Kupplung und die Blitzfrequenz der Stroboskoplampe gemessen und miteinander verglichen. Die Blitzfrequenz der Stroboskoplampe wird so eingestellt, dass diese mit der Drehzahl der Kupplung synchronisiert wird.

Gemäß der amtlichen Maschinenrichtlinie der Europäischen Gemeinschaft ist die Kupplung in einem radialem Abstand von einem rohrförmigen Kupplungsschutz zu umgeben. Der Kupplungsschutz 13 ist mit Inspektionsöffungen 15 versehen, die den Lichteinfall der Stroboskoplampe 14 auf die Markierung 8 und das Anzeigenschild 9 ermöglichen. Weitere dazu versetzte Inspektionsöffnungen 15 erlauben die Stellung von Markierung 8 und Anzeigenschild 9 abzulesen. Damit entfällt die sonst übliche Demontage und anschließende Montage des Kupplungsschutzes.

## Patentansprüche

1. Elastische Kupplung mit zwei gegeneinander verdrehbaren Kupplungsteilen (2, 4), die über Elastomerelemente (5) ineinander greifen, wobei im Bereich des Kupplungsspaltes (7) auf dem Außenrand des einen Kupplungsteiles (4) eine Markierung (8) und auf dem Außenrand des anderen Kupplungsteiles (2) eine Anzeige zur Bestimmung des Relativverdrehwinkels der Kupplungsteile (2, 4) angebracht ist, wobei die Markierung (8) und die Anzeige auf den Kupplungsteilen (2, 4) zueinander mittig angeordnet sind, wobei die Anzeige als Anzeigenschild (9) ausgebildet ist, dass das Anzeigenschild (9) aus einer Skala besteht, die Anzeigenfelder (11, 12) aufweist für den maximal zulässigen und den unzulässigen Bereich des aktuellen, sich aus dem Relativverdrehwinkel ergebenden Verschleißes der betreffenden Elastomerelemente (5), und wobei die Kupplung mit einer ortsfest angeordneten Stroboskoplampe kombinierbar ist, deren intermittierender Strahl auf die Markierung (8) und das Anzeigenschild (9) gerichtet werden kann und deren Blitzfrequenz mit der Drehzahl der Kupplung synchronisierbar ist.

2. Kupplung nach Anspruch 1, **dadurch gekennzeichnet, dass** die Kupplungsteile (2, 4) in einem radialen Abstand von einem rohrförmigen Kupplungsschutz umgeben sind, der mit Öffnungen (15) in dem Bereich versehen ist, der von der Markierung (8) und dem Anzeigenschild (9) während der Rotation der Kupplung bestrichen wird.

## Claims

1. Resilient coupling with two relatively rotatable coupling parts (2, 4) interengaging by way of elastomeric elements (5), wherein in the region of the coupling gap (7) a marking (8) is applied to the outer edge of one coupling part (4) and an indicator is applied to the outer edge of the other coupling part (2) for determining the relative rotational angle of the coupling parts (2, 4), wherein the marking (8) and the indicator are arranged on the coupling parts (2, 4) centrally relative to one another, wherein the indicator is constructed as an indicating panel (9), wherein the indicating panel (9) consists of a scale having indicating fields (11, 12) for the maximum permissible and the impermissible range of the actual wear, which is evident from the relative rotational angle, of the elastomeric elements (5) concemed and wherein the coupling can be combined with a fixedly positioned stroboscopic lamp, the intermittent beam of which can be directed onto the marking (8) and the indicating panel (9) and the flash frequency of which can be synchronised with the rotational speed of the coupling.

2. Coupling according to claim 1, **characterised in that** the coupling parts (2, 4) are surrounded at a radial spacing by a tubular coupling protector which is provided with openings (13) in the region scanned by the marking (8) and the indicating panel (9) during rotation of the coupling.

## Revendications

1. Accouplement élastique doté de deux parties d'accouplement (2, 4) pouvant être tordues l'une par rapport à l'autre, qui viennent en prise par l'intermédiaire d'éléments élastomères (5), un marquage (8) étant aménagé dans la zone de la fente d'accouplement (7) sur le bord extérieur d'une des parties d'accouplement (4) et un affichage pour déterminer l'angle de torsion relatif des parties d'accouplement (2, 4) sur le bord extérieur de l'autre partie d'accouplement (2), le marquage (8) et l'affichage sur les parties d'accouplement (2, 4) étant disposés de manière centrale l'un par rapport à l'autre, l'affichage étant conçu sous forme de panneau d'affichage (9), que le panneau d'affichage (9) est constitué d'une échelle qui comprend des champs d'affichage (11, 12) pour la zone maximale admissible et non admissible de l'usure actuelle des éléments élastomères (5) concernés résultant de l'angle de torsion relatif, et l'accouplement pouvant être combiné à une lampe stroboscopique fixe, dont le faisceau intermittent peut être dirigé sur le marquage (8) et le panneau d'affichage (9) et dont la fréquence d'éclair peut être synchronisée avec la vitesse de rotation de l'accouplement.

2. Accouplement selon la revendication 1, **caractérisé en ce que** les parties d'accouplement (2, 4) sont entourées à une distance radiale par une protection d'accouplement tubulaire, qui est pourvue d'ouvertures (15) dans la zone qui est balayée par le marquage (8) et le panneau d'affichage (9) pendant la rotation de l'accouplement.
